# FASCICULE DE BREVET EUROPEEN

(11) **EP 1 734 293 B1**
(45) Date de publication et mention de la délivrance du brevet: **09.04.2008**
(21) Numéro de dépôt: 05300415.6
(22) Date de dépôt: 25.05.2005
(51) Int. Cl.: F16K 1/30, F16K 1/42

(54) **Robinet pour canalisation d'amenée d'acétylène**
Hahn für Kanalisation der Acetylenzuleitung
Tap for acetylene supply

(43) Date de publication de la demande: 20.12.2006
(73) Titulaire: FRO S.p.A., 37135 Verone (IT)
(72) Inventeur: Bendazzoli, Silvano M., 37134 Verone (IT); Moretti, Alessandro M., 25127 Brescia (IT)
(74) Mandataire: Pittis, Olivier

(56) Documents cités:
- EP-A- 0 458 253
- EP-A- 0 863 337
- DE-U1- 20 017 383
- FR-A- 1 059 870
- US-A- 4 766 927
- US-A- 4 815 698
- US-A1- 2002 008 150

## Description

L'invention porte sur l'utilisation d'un robinet pour commander ou contrôler le passage d'acétylène, délivré par un récipient équipé dudit robinet, telle une bouteille d'acétylène, lequel robinet comporte des moyens permettant de résister à une décomposition accidentelle du gaz, en particulier d'acétylène, au sein du robinet.

Certains gaz conditionnés dans des récipients sous pression, tels des bouteilles de gaz, nécessitent des précautions particulières lorsqu'on souhaite les utiliser. C'est le cas notamment de l'acétylène qui est connu pour être un gaz très instable.

De ce fait, les robinets de commande et de contrôle de la sortie du gaz équipant les bouteilles de conditionnement d'acétylène doivent répondre à des exigences normatives techniques et de sécurité sévères visant à minimiser les risques pour les opérateurs utilisant ces gaz réputés « dangereux » car susceptibles de se décomposer.

Ainsi, la norme EN ISO 15615 fixe au Point 3-7, des prescriptions devant être respectées pour ce qui concerne les robinets ou valves d'arrêt de flux d'acétylène.

En particulier, les éléments internes des robinets de commande de la sortie de gaz doivent résister à toute décomposition accidentelle et intempestive de l'acétylène qui génère inévitablement une augmentation brusque de la pression et de la température interne du robinet.

Afin de répondre à cette exigence, plusieurs solutions ont déjà été proposées.

Ainsi, il a été proposé d'avoir un corps de robinet ou de valve en laiton, qui est l'alliage de cuivre le plus couramment utilisé pour fabriquer les corps de robinets, et de réaliser la garniture de l'obturation en polyamide ou en un autre matériau plastique. Toutefois, cette solution n'est pas satisfaisante car elle ne permet pas de satisfaire efficacement au test de décomposition de l'acétylène.

Il a alors été proposé d'utiliser une garniture d'obturation en laiton ou en cuivre. Toutefois, là encore, cette solution ne satisfait pas au test de décomposition de l'acétylène.

Enfin, il a été proposé de réaliser le corps de robinet ou un matériau autre que le laiton. Cependant, cette solution présente les désavantages d'engendrer une plus grande difficulté de fabrication, notamment d'usinage, et d'accroître considérablement le coût de fabrication du robinet, du fait de l'utilisation d'un matériau forcément plus onéreux que le laiton et du fait de la difficulté accrue d'usinage susmentionnée.

Par ailleurs, le document DE-A-20017383 décrit un robinet avec corps en laiton, et siège et clapet en alliage de nickel de type Hastelloy® C4. Toutefois, ce robinet est utilisé spécifiquement pour contrôler le passage de gaz chlorés.

Le problème à résoudre dans ce contexte est dès lors de proposer un robinet conforme aux prescriptions de la norme EN ISO 15615, qui permette de résister à une décomposition accidentelle d'acétylène, qui soit aisé à fabriquer à l'échelle industrielle et de coût faible.

La solution de l'invention est alors une utilisation d'un robinet de commande du passage d'acétylène pour commander ou pour contrôler le passage d'acétylène délivré par un récipient d'acétylène ou une ligne de distribution d'acétylène auquel est relié ledit robinet, dans laquelle le robinet comprend un corps avec circuit interne d'acétylène entre au moins un orifice d'entrée d'acétylène et un orifice de sortie d'acétylène, ledit corps étant réalisé en un alliage de cuivre; des moyens de contrôle du passage d'acétylène, agencés sur ledit circuit interne, comportent un clapet d'obturation mobile coopérant avec un siège de clapet; et au moins une partie du siège de clapet est réalisée en un matériau ayant un point de fusion supérieur à celui de l'alliage de cuivre formant le corps du robinet de manière à résister à une décomposition accidentelle d'acétylène au sein dudit robinet.

Selon le cas, le robinet de l'invention peut comprendre l'une ou plusieurs des caractéristiques suivantes :
- le corps est formé de laiton.
- le matériau formant une partie du siège de clapet a une température de fusion d'au moins 900°C, en particulier un métal ou une céramique.
- le siège de clapet comprend une pièce de siège avec un passage interne pour le gaz.
- la pièce de siège a une forme de bague ou de cylindre comprenant un passage interne coaxial pour le gaz.
- la pièce de siège est en acier inoxydable ou en céramique, de préférence en acier inoxydable.
- le clapet d'obturation mobile comprend une partie avant faisant saillie et dimensionnée de manière à pouvoir pénétrer, au moins partiellement, à l'intérieur du passage interne de la partie de siège.
- la partie avant faisant saillie du clapet d'obturation comprend une garniture d'étanchéité.
- le clapet d'obturation est, au moins partiellement, réalisé en acier inoxydable ou en céramique.
- la pièce de siège est fixée et maintenue au sein du corps par sertissage, par vissage ou par emmanchement .
- la pièce de siège a une forme de piston.
- la robinet équipe une ligne de distribution de gaz sous pression, telle une canalisation de gaz ou un réseau de canalisation de gaz.

Autrement dit, la solution de l'invention repose sur la réalisation d'un corps de robinet ou corps de valve en laiton, qui est un matériau communément utilisé pour fabriquer de tels corps de robinets, de coût modique et facilement usinable, et, par ailleurs, de protéger le siège de clapet du corps de robinet de toute augmentation intempestive et brusque de la pression et de la température, causée par une décomposition subite d'acétylène, au moyen d'un élément ou pièce de siège en un matériau présentant une température de fusion plus élevée que celle du laiton constituant le corps du robinet. En particulier, on utilise une bague ou analogue en acier inoxydable, en céramique ou similaire, venant se loger dans le corps en laiton, sur le passage du gaz, au niveau du siège de clapet contrôlant l'ouverture / fermeture du robinet, c'est à dire le passage ou non du gaz vers le raccord de sortie.

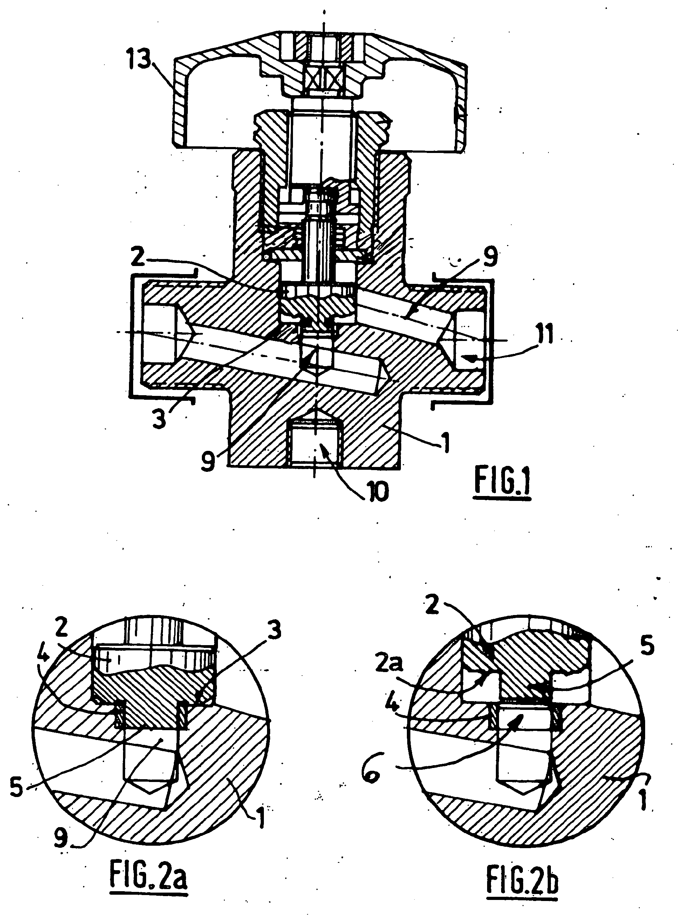

La figure 1 montre une vue en coupe longitudinale d'un robinet utilisé selon l'invention, lequel comprend un corps 1 en laiton, et un circuit ou passage interne 9 pour l'acétylène reliant un orifice d'entrée d'acétylène 10 situé au niveau de la ligne d'alimentation en gaz (non schématisée) sur laquelle est monté le robinet, et un orifice de sortie 11 de gaz situé sur un raccord de sortie, auquel est reliée une canalisation ou un tuyau flexible de distribution de gaz relié par exemple via un système de détente à un chalumeau de soudage de chauffe ou coupage oxyacéthylénique.

Sur le circuit interne 9 de gaz sont aménagés des éléments de contrôle de la sortie de gaz comprenant un clapet d'obturation 2 ou obturateur mobile venant coopérer avec un siège 3 de clapet.

Le mouvement du clapet 2 d'obturation mobile est commandé par l'actionnement par l'opérateur d'un volant rotatif 13 ou d'un levier de manoeuvre commandant l'ouverture ou la fermeture du passage de gaz dans le circuit 9 interne dans le sens allant de l'orifice d'entrée 10 vers l'orifice de sortie 11.

De manière schématique, une mise en rotation manuelle par l'opérateur du volant 13 dans le sens d'un vissage engendre un rapprochement du clapet d'obturation 2 en direction du siège 3 de clapet et la fermeture progressive du passage de gaz. A l'inverse, une rotation dans le sens opposé provoque un décollement du clapet 2 d'obturation du siège 3 de clapet, et la libération de l'acétylène en direction de l'orifice de sortie 11. ,

Les figures 2a et 2b représentent une vue agrandie du clapet 2 et du siège de clapet 3 selon un premier mode de réalisation selon l'invention où l'on voit que, conformément à l'invention, une pièce de siège 4 ayant ici une forme de bague annulaire a été insérée, dans le corps 1 en laiton et coaxialement au passage 9 du gaz, au niveau du siège 3 de clapet, ladite pièce de siège 4 étant réalisée en un matériau ayant un point de fusion supérieur à celui du laiton, ici de l'acier inoxydable.

En outre, on voit également que le clapet d'obturation 2 est lui-même doté d'une partie avant 5 faisant saillie par rapport à la surface avant 2a du clapet 2, c'est à dire la surface du clapet immédiatement en regard du siège 4 de clapet et venant prendre appui sur celui-ci pour opérer une fermeture du passage du gaz. Cette partie avant 5 en saillie est dimensionnée de manière à pouvoir venir pénétrer à l'intérieur du passage central 6 de la bague annulaire 4, comme visible sur la figure 2a. Lors de la libération du gaz, la partie avant 5 du clapet 2 ressort du passage central 6 de la bague annulaire 4, comme visible sur la figure 2b.

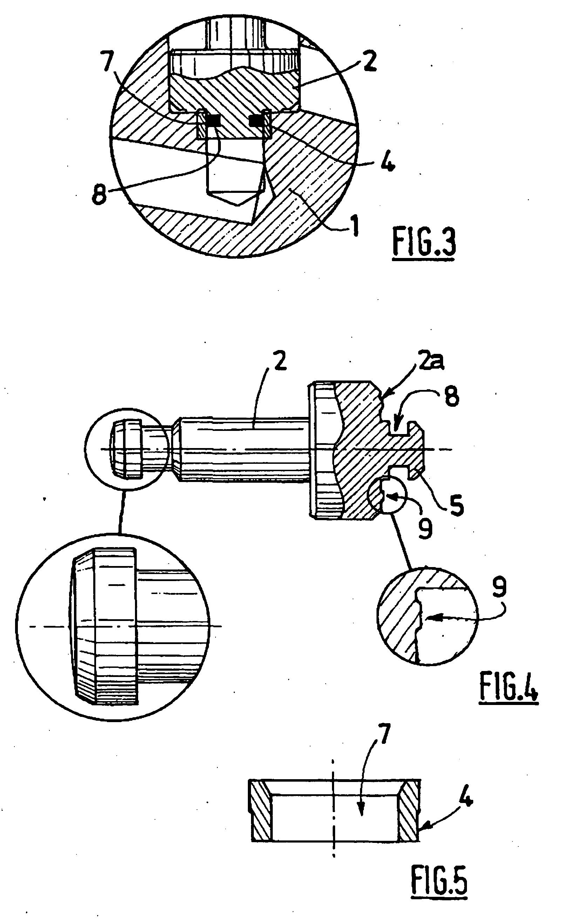

La figure 3 est analogue aux figures 2a et 2b, mais illustre un autre mode de réalisation dans lequel une garniture 7 annulaire est incorporée dans une gorge périphérique 8 aménagée dans la partie avant 5 en saillie du clapet 2. Cette garniture 7 ou joint torique permet, d'une part, de mieux protéger le siège 3 d'une onde de pression qui serait inévitablement engendrée en cas de décomposition d'acétylène et, d'autre part, améliorer l'étanchéité entre le clapet 2 et l'intérieur de la pièce 4 de siège.

Préférentiellement, le clapet d'obturation 2 est ainsi réalisé en un matériau présentant une température de fusion supérieure à celle du laiton, tel l'acier inoxydable ou la céramique.

La figure 4 montre une vue grossie de l'obturateur 2 de la figure 3 où l'on voit que, par ailleurs, la face avant 2a du clapet d'obturation 2, lequel a ici une forme de piston, présente non seulement une partie en saillie 5 comprenant une gorge 8 périphérique pour recevoir le joint d'étanchéité 7 de la figure 3 mais aussi une lèvre 9 circulaire portée par la surface avant 2a et coaxiale à la partie avant 5 en saillie, laquelle lèvre 9 circulaire est destinée à venir prendre appui sur le siège 3 du clapet.

En outre, la figure 5 propose un mode de réalisation d'une pièce de siège 4 en forme de bague 4 avec passage interne 6 pour le gaz selon l'invention, comme montré sur les figures 1 à 3.

## Revendications

1. Utilisation d'un robinet de commande du passage d'acétylène pour commander ou pour contrôler le passage d'acétylène délivré par un récipient d'acétylène ou une ligne de distribution d'acétylène auquel est relié ledit robinet, dans laquelle le robinet comprend un corps (1) avec circuit interne (9) d'acétylène entre au moins un orifice d'entrée (10) d'acétylène et un orifice de sortie (11) d'acétylène, ledit corps (1) étant réalisé en un alliage de cuivre ; des moyens de contrôle (2, 3, 13) du passage d'acétylène, agencés sur ledit circuit interne (9), comportent un clapet d'obturation (2) mobile coopérant avec un siège (3) de clapet; et au moins une partie (4) du siège (3) de clapet est réalisée en un matériau ayant un point de fusion supérieur à celui de l'alliage de cuivre formant le corps (1) du robinet de manière à résister à une décomposition accidentelle d'acétylène au sein dudit robinet.

2. Utilisation selon la revendication 1, **caractérisée en ce que** le corps (1) est formé de laiton et / ou le matériau formant une partie (4) du siège de clapet (3) a une température de fusion d'au moins 900°C.

3. Utilisation selon la revendication 1 ou 2, **caractérisée en ce que** le siège (3) de clapet comprend une pièce de siège (4) avec un passage interne (7) pour l'acétylène.

4. Utilisation selon la revendication 1 à 3, **caractérisée en ce que** la pièce (4) de siège a une forme de bague ou de cylindre comprenant un passage interne (7) coaxial pour l'acétylène.

5. Utilisation selon la revendication 1 à 4, **caractérisée en ce que** la pièce (4) de siège est en acier inoxydable ou en céramique, de préférence en acier inoxydable.

6. Utilisation selon la revendication 1 à 5, **caractérisée en ce que** le clapet (2) d'obturation mobile comprend une partie avant (5) faisant saillie et dimensionnée de manière à pouvoir pénétrer, au moins partiellement, à l'intérieur du passage interne (7) de la partie (4) de siège.

7. Utilisation selon la revendication 6, **caractérisée en ce que** la partie avant (5) faisant saillie du clapet (2) d'obturation comprend une garniture d'étanchéité (7).

8. Utilisation selon la revendication 1 à 7, **caractérisée en ce que** le clapet (2) d'obturation est, au moins partiellement, réalisé en acier inoxydable ou en céramique.

9. Utilisation selon la revendication 1 à 8, **caractérisée en ce que** la pièce de siège 4 est fixée et maintenue au sein du corps (1) par sertissage, par vissage ou par emmanchement.

10. Utilisation selon la revendication 1 à 9, **caractérisée en ce que** la pièce de siège (4) a une forme de piston.

## Claims

1. Use of an acetylene passage control valve for bringing about or controlling the passage of acetylene delivered by an acetylene container or an acetylene feed line to which said valve is connected, in which use the valve comprises a body (1) with an internal acetylene pathway (9) between at least one acetylene entrance port (10) and an acetylene exit port (11), said body (1) being made of a copper alloy; acetylene passage control means (2, 3, 13) located on said internal pathway (9) comprise a movable open/close element (2) acting on a valve seat (3); and at least one part (4) of the valve seat (3) is made of a material with a higher melting point than the copper alloy forming the body (1) of the valve in such a way as to withstand accidental decomposition of acetylene inside said valve.

2. Use according to Claim 1, **characterized in that** the body (1) is made of brass, and/or the material forming a part (4) of the valve seat (3) has a melting point of at least 900°C.

3. Use according to Claim 1 or 2, **characterized in that** the valve seat (3) comprises a seat piece (4) with an internal passage (7) for the acetylene.

4. Use according to Claims 1 to 3, **characterized in that** the seat piece (4) is in the form of a ring or cylinder with a coaxial internal passage (7) for the acetylene.

5. Use according to Claims 1 to 4, **characterized in that** the seat piece (4) is made of stainless steel or a ceramic, preferably stainless steel.

6. Use according to Claims 1 to 5, **characterized in that** the movable open/close element (2) comprises a projecting front part (5) sized to be able to at least partly enter the internal passage (7) of the seat part (4).

7. Use according to Claim 6, **characterized in that** the projecting front part (5) of the open/close element (2) comprises a seal (7).

8. Use according to Claims 1 to 7, **characterized in that** the open/close element (2) is at least partly made of stainless steel or a ceramic.

9. Use according to Claims 1 to 8, **characterized in that** the seat piece (4) is fixed and held in the body (1) by crimping, screwing or friction.

10. Use according to Claims 1 to 9, **characterized in that** the seat piece (4) is pistion-shaped.

## Patentansprüche

1. Verwendung eines Hahns zur Steuerung des Durchlasses von Acetylen, um den Durchlass von von einem Acetylenbehälter oder einer Acetylenabgabeleitung, mit dem bzw. der der Hahn verbunden ist, zugeführtem Acetylen zu steuern oder zu regulieren, wobei der Hahn einen Körper (1) mit innerem Acetylenkreis (9) zwischen mindestens einer Acetyleneingangsöffnung (10) und einer Acetylenausgangsöffnung (11) umfasst, wobei der Körper (1) aus einer Kupferlegierung hergestellt ist; an dem inneren Kreis (9) angeordnete Mittel (2, 3, 13) zur Regulierung des Acetylendurchlasses ein Absperrventil (2) umfassen, das mit einem Ventilsitz (3) beweglich zusammenwirkt; und mindestens ein Teil (4) des Ventilsitzes (3) aus einem Material hergestellt ist, dessen Schmelzpunkt höher als der der den Körper (1) des Hahns bildenden Kupferlegierung ist, um einer versehentlichen Acetylenzersetzung im Inneren des Hahns zu widerstehen.

2. Verwendung nach Anspruch 1, **dadurch gekennzeichnet, dass** der Körper (1) aus Messing gebildet ist und/oder das einen Teil (4) des Ventilsitzes (3) bildende Material eine Schmelztemperatur von weniger als 900°C aufweist.

3. Verwendung nach Anspruch 1 oder 2, **dadurch gekennzeichnet, dass** der Ventilsitz (3) einen Sitzteil (4) mit einem inneren Durchgang (7) für das Acetylen umfasst.

4. Verwendung nach Anspruch 1 bis 3, **dadurch gekennzeichnet, dass** der Sitzteil (4) eine Ring- oder Zylinderform mit einem koaxialen inneren Durchgang (7) für das Acetylen aufweist.

5. Verwendung nach Anspruch 1 bis 4, **dadurch gekennzeichnet, dass** der Sitzteil (4) aus rostfreiem Stahl oder aus Keramik, vorzugsweise aus rostfreiem Stahl, besteht.

6. Verwendung nach Anspruch 1 bis 5, **dadurch gekennzeichnet, dass** das bewegliche Absperrventil (2) einen vorragenden vorderen Teil (5) aufweist, der so dimensioniert ist, dass er zumindest teilweise in das Innere des inneren Durchgangs (7) des Sitzteils (4) eintreten kann.

7. Verwendung nach Anspruch 6, **dadurch gekennzeichnet, dass** der vorragende vordere Teil (5) des Absperrventils (2) eine Dichtung (7) aufweist.

8. Verwendung nach Anspruch 1 bis 7, **dadurch gekennzeichnet, dass** das Absperrventil (2) zumindest teilweise aus rostfreiem Stahl oder aus Keramik hergestellt ist.

9. Verwendung nach Anspruch 1 bis 8, **dadurch gekennzeichnet, dass** der Sitzteil (4) durch Quetschen, Verschrauben oder durch Schrumpfverbindung im Inneren des Körpers (1) befestigt und gehalten wird.

10. Verwendung nach Anspruch 1 bis 9, **dadurch gekennzeichnet, dass** der Sitzteil (4) eine Kolbenform aufweist.
